# FASCICULE DE BREVET EUROPEEN

(11) **EP 3 446 778 B1**
(45) Date de publication et mention de la délivrance du brevet: **15.04.2020**
(21) Numéro de dépôt: 18190181.0
(22) Date de dépôt: 22.08.2018
(51) Int. Cl.: B01F 5/06, B01F 5/00

(54) **ÉLÉMENT STRUCTURÉ REVÊTU DE MANIÈRE DIFFÉRENCIÉE ET SERVANT DE SUPPORT À L'ÉCOULEMENT DE PLUSIEURS FLUIDES**
STRUKTURIERTES ELEMENT, DAS UNTERSCHIEDLICHE BESCHICHTUNGEN AUFWEIST UND ALS HILFSELEMENT ZUM ABLAUF VON VERSCHIEDENEN FLUIDEN DIENT
STRUCTURED ELEMENT COATED IN A DIFFERENTIATED MANNER AND SERVING AS A SUPPORTING FOR THE FLOW OF MULTIPLE FLUIDS

(30) Priorité: 23.08.2017 FR 1757836
(43) Date de publication de la demande: 27.02.2019
(73) Titulaire: Commissariat à l'énergie atomique et aux énergies alternatives, 75015 Paris (FR)
(72) Inventeur: DELLEA, Olivier, 42350 La Talaudière (FR); FUGIER, Pascal, 38190 Bernin (FR)
(74) Mandataire: Brevalex

(56) Documents cités:
- EP-A1- 1 743 692
- EP-A1- 3 034 159
- EP-A2- 2 002 883
- WO-A1-03/061949

## Description

### DOMAINE TECHNIQUE

L'invention se rapporte au domaine de l'écoulement de fluides sur un élément, et plus particulièrement sur un élément structuré par la présence de cavités d'air réparties de manière régulière sur la surface structurée de cet élément.

L'invention s'applique à tous les domaines techniques dans lesquels il est recherché à favoriser l'écoulement de plusieurs fluides, circulant de façon successive ou simultanée sur un élément donné.

A titre d'exemple non limitatif, l'invention s'applique aux mélangeurs statiques, dont les éléments mélangeurs doivent permettre un écoulement satisfaisant des fluides en présence, tout en assurant leur mélange.

### ETAT DE LA TECHNIQUE ANTERIEURE

Dans le domaine de l'écoulement de fluides, il est connu de mettre en œuvre des éléments structurés par la présence de cavités de faibles profondeurs. Ces cavités sont des petites alvéoles, à fond fermé, habituellement pratiquées de manière à s'évaser dans la direction allant du fond vers l'ouverture. Durant l'écoulement du/des fluides sur ce type d'élément structuré, de l'air est piégé dans les cavités et permet de former un support pour ce/ces fluides, avec des frottements réduits. Ce principe est par exemple connu pour l'écoulement de l'eau, avec la mise en œuvre de surfaces dites hydrophobes ou superhydrophobes, pourvues de cavités de faibles dimensions dans lesquelles l'air se trouve sous pression au contact de l'eau.

Cependant, en fonction de la nature des fluides en présence, ceux-ci sont susceptibles de se déposer dans le fond de tout ou partie des cavités prévues sur l'élément structuré. Cela réduit les performances d'écoulement, en raison de l'augmentation des frottements.

Le document EP2002883 A2 divulgue un élément structuré selon le préambule de la revendication 1.

### EXPOSE DE L'INVENTION

Pour résoudre au moins partiellement le problème identifié ci-dessus, l'invention a tout d'abord pour objet un élément structuré destiné à être au contact d'au moins un premier fluide et un second fluide, l'élément structuré comprenant une surface de circulation de fluides structurée par la présence de cavités d'air de profondeur comprise entre 100 et 1000 µm et réparties de manière régulière sur la surface structurée, chaque cavité étant délimitée par une surface de cavité.

Selon l'invention, la surface de cavité comprend au moins une première zone et une seconde zone se succédant selon une direction de profondeur de la cavité, la première zone étant revêtue d'un premier ensemble de particules présentant des propriétés de répulsion du premier fluide, et la seconde zone étant revêtue d'un second ensemble de particules différent du premier ensemble et présentant des propriétés de répulsion du second fluide, le second ensemble de particules assurant une plus faible répulsion du premier fluide que le premier ensemble de particules, tandis que celui-ci assure une plus faible répulsion du second fluide que le second ensemble de particules.

L'invention apporte de ce fait une réponse astucieuse au risque de remplissage des cavités par les fluides en présence, en réalisant un revêtement répulsif différencié de particules au sein de ces cavités. Ainsi, les risques que l'un des fluides se dépose dans le fond des cavités sont fortement réduits, que ces fluides circulent simultanément ou de manière successive sur la surface structurée de l'élément. En limitant ces risques, l'écoulement des fluides peut bénéficier au mieux des avantages conférés par les cavités visant à favoriser le glissement et à réduire les frottements.

A titre indicatif, dans le cas particulier de l'une des applications envisagées relative aux mélangeurs statiques, le maintien fonctionnel des cavités offre un avantage supplémentaire à celui de l'amélioration de l'écoulement. En effet, sur la surface de circulation structurée, l'alternance de zones avec et sans glissement entraîne des conséquences directes en matière de dispersion hydrodynamique. En d'autres termes, la variation de la distribution de vitesse créée par l'alternance de zones glissantes au niveau des cavités remplies d'air, et de zones moins glissantes au niveau des parties lisses de cette surface, constitue une source de recirculation des fluides. Ce phénomène génère des turbulences et se révèle par conséquent propice à un meilleur mélange des fluides au sein du mélangeur statique, dont les performances globales s'en trouvent augmentées.

L'invention prévoit de préférence au moins l'une des caractéristiques optionnelles suivantes, prises isolément ou en combinaison.

La profondeur des cavités d'air est encore plus préférentiellement comprise entre 100 et 500 µm.

Lesdits premier et second ensembles de particules comprennent des particules dont la plus grande dimension est comprise entre 0,2 et 10 µm.

Lesdits premier et second ensembles de particules comprennent des particules de formes plates et/ou hémisphériques, même si toute autre forme peut être envisagée, sans sortir du cadre de l'invention.

Les cavités sont réparties de manière régulière sur la surface structurée selon un maillage de forme triangulaire, carré, rectangulaire ou hexagonal.

Chaque cavité présente une plus grande dimension comprise entre 600 et 750 µm.

Chaque cavité s'évase en se rapprochant de son ouverture, et prend préférentiellement la forme générale d'un cône ou d'une pyramide, éventuellement tronqué(e). Dans ce cas de figure, chaque cavité peut présenter une partie inférieure de forme cylindrique formant réservoir, dont le fond est préférentiellement revêtu de particules.

Chaque premier/second ensemble de particules s'étend tout le long d'une ligne fermée de la première/seconde zone de la surface de cavité.

Alternativement à la solution du maillage, les cavités peuvent être réparties de manière régulière sur la surface structurée en formant des rainures parallèles.

Ladite surface de cavité présente une inclinaison, par rapport à une direction de profondeur de la cavité, comprise entre 15 et 35°, et plus préférentiellement entre 20 et 30°.

De préférence, l'élément est réalisé à l'aide de l'un des matériaux suivants :
- polyéthylène haute densité ;
- poly(méthacrylate de méthyle) ;
- polycarbonate.

D'autres matériaux peuvent néanmoins être envisagés, notamment dans la famille des polymères thermoplastiques amorphes et semi-cristallins. Ainsi d'autres matériaux possibles pour la réalisation de l'élément structuré sont par exemple : ABS, polyphenylsulfone, polysulfone, polystyrène, polyphenylene, ether, polyamide amorphe, acrylique, poly(2-ethyl-2-oxaZoline), et leurs mélanges.

Ledit premier ensemble de particules comprend des particules de nitrure de bore hexagonal, et le second ensemble de particules comprend des particules de silice. D'autres types de particules peuvent bien évidemment être employés pour assurer la répulsion des fluides et limiter le mouillage de la surface de cavité par ces derniers, le choix étant alors réalisé en fonction de la nature des fluides concernés.

Enfin, selon un mode de réalisation envisagé, ledit second ensemble de particules se situe plus proche du fond de la cavité que le premier ensemble de particules, et ledit second ensemble comporte des particules présentant des propriétés de répulsion de l'eau. Ainsi, en cas de revêtement préalable de la surface structurée par un premier fluide, ce dernier est empêché de pénétrer dans les cavités grâce au premier ensemble de particules situé proche de l'ouverture des cavités. Ensuite, lorsque la surface structurée se trouve au contact de l'eau en tant que second fluide, l'eau est empêchée d'atteindre le fond des cavités grâce au second ensemble de particules situé plus bas dans la cavité. Le fond de cavité reste ainsi rempli d'air, et ce même en cas d'efforts mécaniques sur l'élément structuré, comme des frottements ou des impacts. En d'autres termes, l'hydrophobicité de la surface structurée est conservée même en cas de revêtement préalable de cette surface par un autre fluide, en théorie susceptible de s'introduire dans les cavités.

L'invention a également pour objet un mélangeur statique comprenant au moins un élément structuré tel que décrit ci-dessus.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 représente une vue en perspective d'un mélangeur statique comprenant un ou plusieurs éléments structurés selon l'invention ;
- la figure 2 représente une vue de dessus d'une partie de l'un des éléments structurés montrés sur la figure précédente ;
- la figure 3 est une vue en coupe prise le long de la ligne III-III de la figure 2 ;
- la figure 4 est une vue en coupe prise le long de la ligne IV-IV de la figure 3 ;
- la figure 5 est une vue en coupe prise le long de la ligne V-V de la figure 3 ;
- la figure 6 est une vue similaire à celle de la figure 3, selon une alternative de réalisation ;
- la figure 7 est une vue similaire à celle de la figure 2, selon une autre alternative de réalisation ;
- la figure 8 est une vue similaire à celle de la figure 6, selon encore une autre réalisation ;
- les figures 9a et 9b sont des alternatives de réalisation à celles montrées sur les figures 2 et 7 ;
- la figure 10 est une vue en perspective d'une partie d'un élément structuré selon un autre mode de réalisation préféré de l'invention ;
- les figures 11a et 11b schématisent des étapes de mise en œuvre d'un procédé de fabrication de l'élément structuré représenté sur les figures 2 à 5 ; et
- les figures 12a et 12b schématisent une autre application de l'invention, dans laquelle des fluides circulent successivement sur l'élément structuré.

### EXPOSE DETAILLE DE MODES DE REALISATION PREFERES

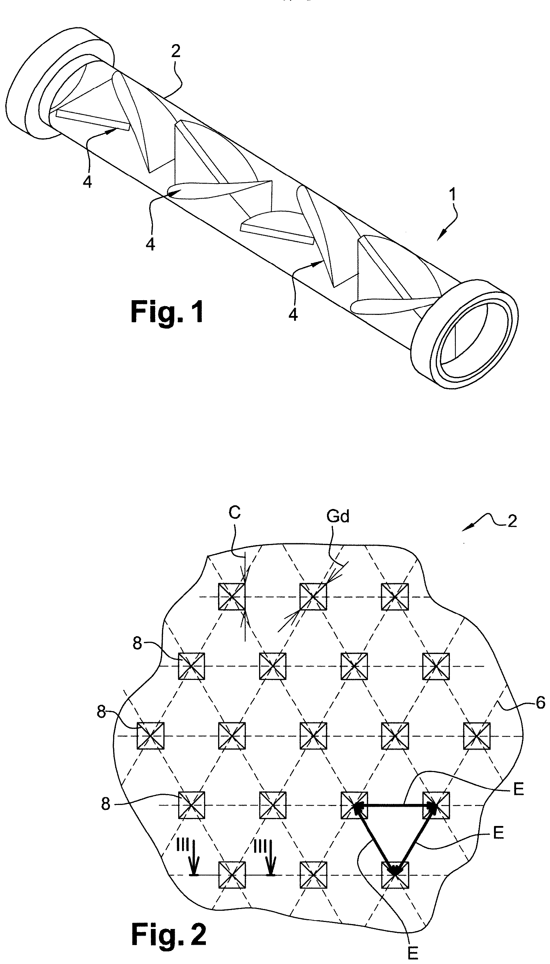

En référence tout d'abord à la figure 1, il est représenté un mélangeur statique 1 comprenant un conduit 2 dans lequel sont destinés à être mélangés au moins deux fluides. Au sein de ce conduit 2, il est agencé des éléments structurés 4 formant des organes mélangeurs. Ces éléments 4 présentent par exemple une forme d'hélice, appropriée pour permettre un mélange optimal des fluides qui rencontrent ces éléments en circulant à l'intérieur du conduit 2.

A titre d'exemple non limitatif, ce mélangeur statique 1 peut être dédié à la formation de gouttelettes de deux fluides réputés immiscibles, comme de l'eau et de l'huile de vaseline. Une telle technique est décrite dans le document « T. Lemenand et al., Formation de gouttelettes dans un mélange turbulent de deux fluides immiscibles, XVème Congrès Français de Mécanique, Nancy, 2001 *».*

Une partie de l'un des éléments structurés 4 est montrée en vue de dessus sur la figure 2. Sur cette figure, il est donc représenté l'une des surfaces extérieures de l'élément 4, correspondant à une surface structurée de circulation de fluides 6. Cette surface est plane ou présente une ou plusieurs courbures. Elle est dite structurée car elle comporte une multitude de cavités 8 réparties de manière régulière sur cette surface 6. Sur la figure 2 ainsi que sur les autres figures, les dimensions des cavités ont été volontairement agrandies, pour des raisons évidentes de clarté. Néanmoins, comme cela sera détaillé ci-après, il est à comprendre que ces cavités 8 sont de faibles dimensions. Par exemple, leur ouverture présente une forme carrée ou rectangulaire, dont la plus grande dimension « Gd » correspondant à la diagonale est comprise entre 600 et 750 µm. Le côté « C » de ces ouvertures est en effet de l'ordre de 500 µm.

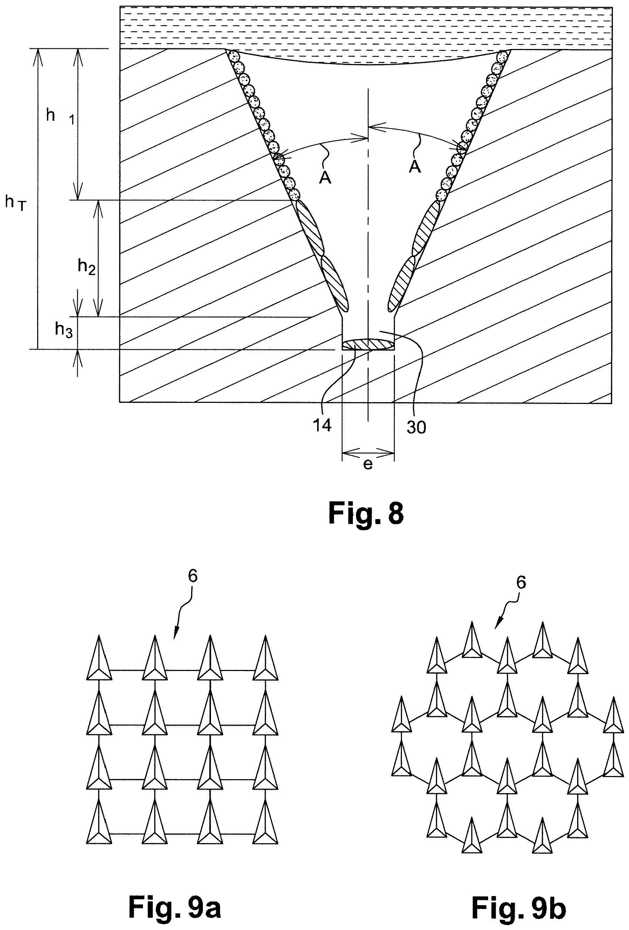

Les cavités 8 sont ici agencées selon un maillage de forme triangulaire, comme cela a été schématisé par les pointillés de la figure 2. Ainsi, une cavité 8 se trouve au niveau de chacun des sommets des triangles, de forme préférentiellement équilatérale. L'entraxe « E » entre ces cavités 8, correspondant également au pas ou encore à la longueur des côtés des triangles, est de l'ordre de 1 à 3 mm, et encore plus préférentiellement proche de 2 mm. D'autres formes sont néanmoins possibles pour le maillage, comme le montrent les figures 9a et 9b représentant respectivement un maillage carré ou rectangulaire, ainsi qu'un maillage hexagonal.

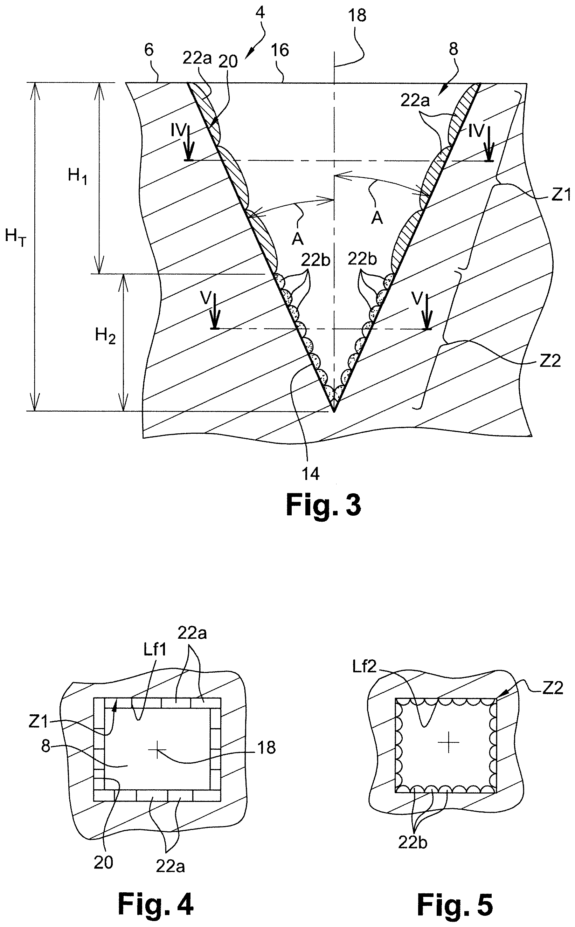

En référence à présent aux figures 3 à 5, il est représenté l'une des cavités 8 présentes à la surface 6 de l'élément structuré 4. Cette cavité 8 s'évase en allant de son fond 14 vers son ouverture 16, décalés selon une direction de profondeur 18 préférentiellement orthogonale localement à la surface structurée 6. Plus précisément, dans ce mode de réalisation, la cavité 6 présente une forme générale de pyramide à base carrée, avec cette base correspondant à l'ouverture 16. En d'autres termes, la surface de cavité 20 correspond à la réunion de quatre faces triangulaires, de nature isocèle ou équilatérale. En coupe transversale telle que montrée sur la figure 3, l'angle d'inclinaison « A » entre chacune de ces faces et la direction de profondeur 18 est préférentiellement compris entre 20 et 30°.

Selon la direction 18, passant par le sommet de la pyramide et correspondant à l'axe central de la cavité 8, celle-ci présente une profondeur préférentiellement comprise entre 100 et 500 µm. Cette profondeur, correspondant à la hauteur totale « Ht » de la cavité, est ici segmentée en deux parties de hauteurs respectives « H1 » et « H2 » d'étendues identiques ou similaires. Néanmoins, une autre répartition peut être adoptée entre les deux hauteurs « H1 » et « H2 » qui se succèdent de l'ouverture 16 vers le fond 14 de la cavité, sans sortir du cadre de l'invention. Plus précisément, la hauteur « H1 » correspond à la hauteur d'une première zone Z1 de la surface de cavité 20, tandis que la hauteur « H2 » correspond à la hauteur d'une seconde zone Z2 de cette surface 20, étant précisé que les deux zones sont adjacentes selon la direction de profondeur 18. La zone Z1, définissant à son extrémité haute l'ouverture 16, présente ainsi une forme de pyramide tronquée, alors que la zone Z2 qui définit le fond 16 présente quant à elle une forme de pyramide.

Dans ce mode de réalisation préféré, la première zone Z1 est entièrement revêtue d'un premier ensemble de particules 22a, par exemple de formes plates et de grandes dimensions comprises entre 1 et 10 µm. Les particules 22a s'étendent ainsi tout le long de chaque ligne fermée de la première zone Z1, comme la ligne fermée Lf1 de forme carrée s'inscrivant dans le plan de coupe de la figure 4. La nature de ces particules 22a est déterminée de façon à assurer la répulsion d'un premier fluide, afin d'aboutir à un faible mouillage de ces particules 22a par le premier fluide. Cela permet d'éviter que le premier fluide ne pénètre dans la cavité 8, et se dépose dans le fond 14 de celle-ci. A titre indicatif, le matériau utilisé pour réaliser ce premier ensemble de particules 22a est le nitrure de bore hexagonal.

De manière analogue, la seconde zone Z2 est entièrement revêtue d'un second ensemble de particules 22b, par exemple de formes hémisphériques de diamètres compris entre 0,2 et 0,6 µm. Les particules 22b s'étendent ainsi tout le long de chaque ligne fermée de la seconde zone Z2, comme la ligne fermée Lf2 de forme carrée s'inscrivant dans le plan de coupe de la figure 5. La nature de ces particules 22b est elle aussi déterminée de façon à assurer la répulsion d'un second fluide, afin d'aboutir à un faible mouillage de ces particules 22b par le second fluide. Cela permet d'éviter que le second fluide ne pénètre dans le fond de la cavité 8. A titre indicatif, le matériau utilisé pour réaliser ce second ensemble de particules 22b est la silice, par exemple un aérogel de silice.

En outre, les matériaux sont choisis de sorte que le second ensemble de particules 22b assure une moins bonne répulsion du premier fluide que celle procurée par le premier ensemble de particules 22a, et réciproquement. Ces particules sont revêtues sur la surface de cavité 20, en étant préférentiellement semi-enterrées dans celle-ci. Le corps de l'élément structuré 4, qui forme substrat pour les particules 22a, 22b, est préférentiellement du type polymère thermoplastique amorphe et semi-cristallin, par exemple : polyéthylène haute densité (PEHD), poly(méthacrylate de méthyle) (PMMA), ou encore polycarbonate (PC).

D'autres morphologies peuvent être prévues pour le revêtement à gradient d'énergie présent sur la surface de cavité 20, comme par exemple en inversant le premier et le second ensemble de particules. Néanmoins, cette morphologie du revêtement, correspondant à sa composition et à sa forme à l'échelle micrométrique, peut être davantage modifiée par exemple en faisant varier le rapport des hauteurs « H1 » et « H2 », en prévoyant un nombre de zones supérieur à deux qui se succèdent selon la direction 18, ou encore en prévoyant une ou plusieurs zones de la surface de cavité 20 qui ne soient pas revêtues de particules. Dans ce dernier cas, il est tout de même préférentiellement prévu qu'au moins 50% de la surface de cavité 20 soit revêtue de particules permettant d'influer significativement sur la répulsion d'un fluide donné, mis en oeuvre dans l'application concernée.

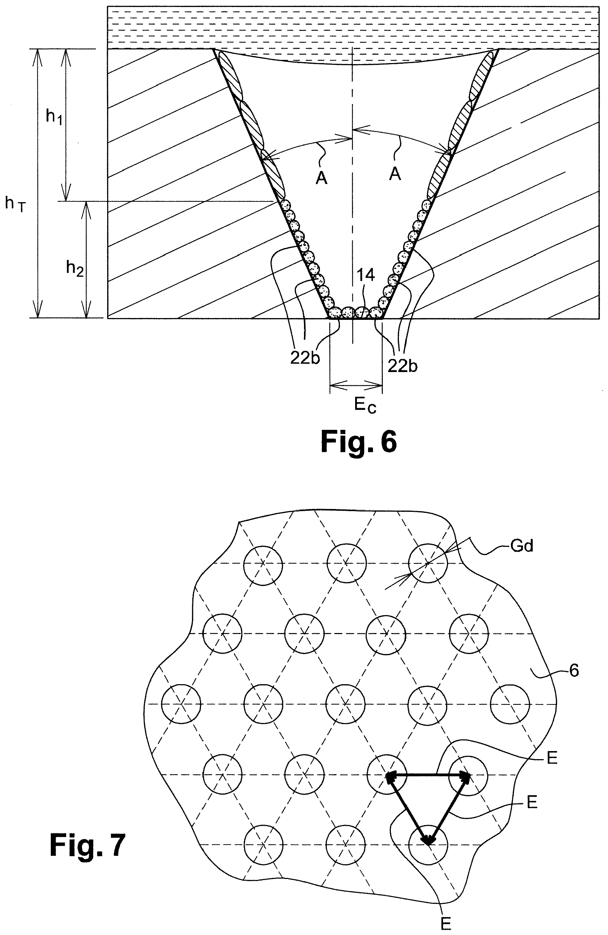

La géométrie des cavités 8 peut également différer par rapport à celle décrite précédemment. En particulier, comme le montre la figure 6, la pyramide peut être tronquée au niveau du fond 14, qui est préférentiellement revêtu par le second ensemble de particules 22b. L'écartement « Ec » entre les faces triangulaires de la surface de cavité est alors de l'ordre de 100 µm au niveau du fond plat 14.

La forme pyramidale de cette cavité 8 peut d'ailleurs être remplacée par une forme conique, comme illustré sur la figure 7. Les dimensions de ces cavités sont identiques ou similaires à celles exposées pour les cavités pyramidales. Ici aussi, le cône peut être tronqué au niveau du fond 14.

Egalement, la cavité 8 peut présenter une partie inférieure de forme cylindrique, à savoir de section constante dont la géométrie est celle de la section du reste de la cavité. Comme cela est montré sur la figure 8, cette partie inférieure cylindrique forme un réservoir 30 dont le fond constitue alors le fond 14 de la cavité, préférentiellement revêtu de particules. La paroi latérale du réservoir n'est quant à elle pas nécessairement revêtue de particules.

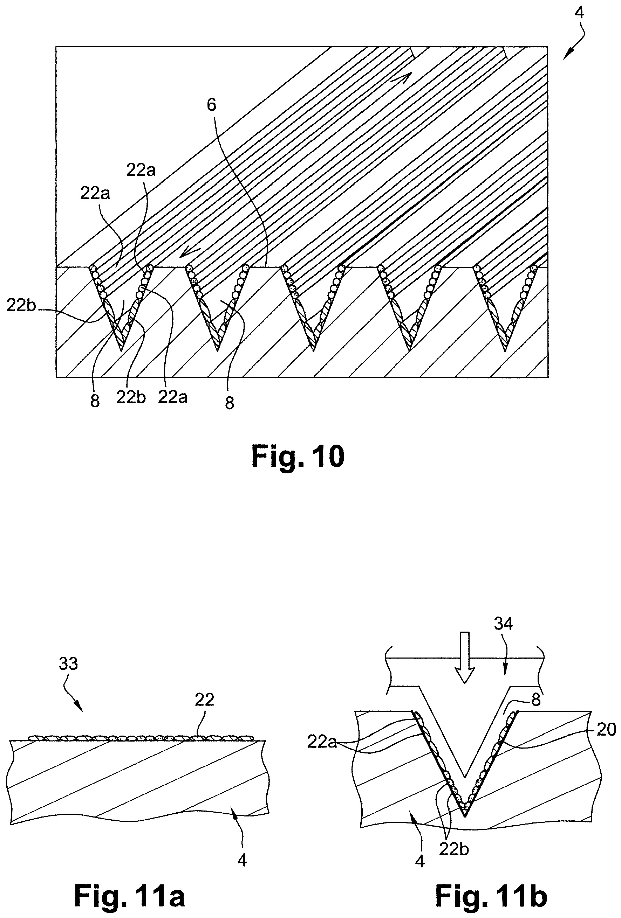

Enfin, dans un autre mode de réalisation envisagé et montré sur la figure 10, les cavités 8 ne sont plus ponctuelles et agencées selon un maillage donné. Elles forment des rainures parallèles, de préférence de section transversale en forme de V. Leur revêtement par les premier et second ensembles de particules 22a, 22b est similaire à celui décrit pour les cavités ponctuelles. Sur chaque flanc de la rainure 8, une bande de premières particules 22a se trouve agencée au-dessus d'une bande de secondes particules 22b.

Quelle que soit la configuration envisagée, de nombreuses techniques peuvent être employées pour la réalisation de l'élément structuré 4. Celle préférée, montrée sur les figures 11a et 11b, consiste à déposer sur l'élément plan 4 non encore structuré, un film formé des particules 22a, 22b ordonnées convenablement. Ce film 33 est par exemple préalablement obtenu sur un substrat liquide, grâce à la technique connue de *Langmuir-Blodgett,* ou par mise en œuvre d'une technique similaire.

Ensuite, un outillage spécifique 34 est utilisé pour réaliser un emboutissage en relief à chaud (également connu sous l'appellation « *hot embossing »),* comme illustré sur la figure 11b. Cet emboutissage permet simultanément de créer les cavités 8, et également d'incruster les particules du film 33 dans la surface de cavité 20. Les deux ensembles de particules 22a, 22b sont ainsi automatiquement créés sur la surface de cavité 20 et positionnés correctement sur celle-ci, étant donné que l'ordonnancement des particules n'est pas modifié par rapport à celui réalisé au sein du film 33.

Dans le cas cité de l'application de l'invention à un mélangeur statique, les deux fluides à mélanger sont ainsi empêchés de s'introduire dans le fond des cavités de l'élément mélangeur, grâce aux ensembles de particules 22a, 22b qui participent à leur répulsion. L'écoulement de ces fluides peut ainsi être réalisé de manière satisfaisante de par la conservation d'air dans les cavités 8, impliquant des frottements réduits lors du passage de ces fluides sur ces cavités. En outre, la variation de la distribution de vitesse créée par l'alternance de zones glissantes au niveau des cavités 8 remplies d'air, et de zones moins glissantes au niveau des parties lisses de la surface structurée 8, constitue une source de recirculation des fluides générant des turbulences propices à un meilleur mélange des fluides au sein du mélangeur statique.

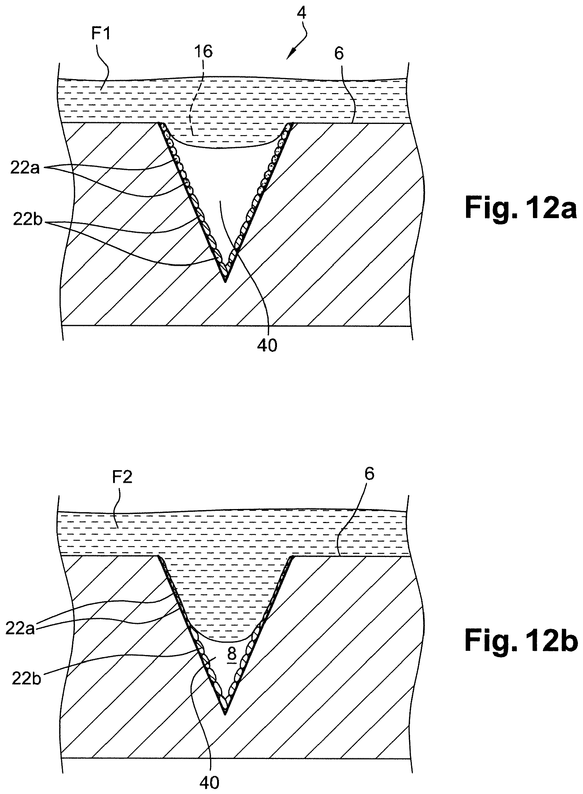

Selon une autre application de l'invention, deux fluides peuvent être prévus pour circuler successivement sur la surface structurée 6, et non plus simultanément comme dans l'application précédente. Cette application a été schématisée sur les figures 12a et 12b. Un premier fluide F1 circule d'abord sur la surface structurée 12. Il peut s'agir d'un fluide du type liquide comprenant un ou plusieurs éléments parmi lesquels du fluor, de la céramique, du graphite, de la paraffine naturelle, de la silicone, du molybdène. Grâce au premier ensemble de particules 22a repoussant ce premier fluide F1, celui-ci mouille très faiblement l'intérieur des cavités 8, comme le montre la forme de la goutte sur la figure 12a au niveau de l'ouverture 16. L'air 40 peut ainsi subsister dans les cavités pendant l'écoulement du premier fluide F1.

Dans cette application, le second fluide F2 circulant sur la surface structurée 6 est de l'eau. Grâce au second ensemble de particules 22b, l'eau mouille très peu ce second ensemble qui la repousse, et ici encore, de l'air 40 peut subsister dans les cavités 8 pendant l'écoulement de l'eau sur la surface 6.

L'alternance de circulation des fluides F1, F2 sur la surface structurée 6 peut ensuite être répétée sans jamais risquer le bouchage des cavités d'air 8, impliquant que l'élément 4 conserve en permanence toutes ses fonctionnalités.

## Revendications

1. Elément structuré (4) destiné à être au contact d'au moins un premier fluide (F1) et un second fluide (F2), l'élément structuré comprenant une surface de circulation de fluides (6) structurée par la présence de cavités d'air (8) de profondeur comprise entre 100 et 1000 µm et réparties de manière régulière sur la surface structurée (6), chaque cavité (8) étant délimitée par une surface de cavité (20),
**caractérisé en ce que** la surface de cavité comprend au moins une première zone (Z1) et une seconde zone (Z2) se succédant selon une direction de profondeur (18) de la cavité, la première zone étant revêtue d'un premier ensemble de particules (22a) présentant des propriétés de répulsion du premier fluide, et la seconde zone étant revêtue d'un second ensemble de particules (22b) différent du premier ensemble et présentant des propriétés de répulsion du second fluide, le second ensemble de particules assurant une plus faible répulsion du premier fluide que le premier ensemble de particules, tandis que celui-ci assure une plus faible répulsion du second fluide que le second ensemble de particules.

2. Elément structuré selon la revendication 1, **caractérisé en ce que** la profondeur des cavités d'air (8) est comprise entre 100 et 500 µm.

3. Elément structuré selon l'une quelconque des revendications précédentes, **caractérisé en ce que** lesdits premier et second ensembles de particules (22a, 22b) comprennent des particules dont la plus grande dimension est comprise entre 0,2 et 10 µm.

4. Elément structuré selon l'une quelconque des revendications précédentes, **caractérisé en ce que** lesdits premier et second ensembles de particules (22a, 22b) comprennent des particules de formes plates et/ou hémisphériques.

5. Elément structuré selon l'une quelconque des revendications précédentes, **caractérisé en ce que** les cavités (8) sont réparties de manière régulière sur la surface structurée (6) selon un maillage de forme triangulaire, carré, rectangulaire ou hexagonal.

6. Elément structuré selon la revendication précédente, **caractérisé en ce que** chaque cavité présente une plus grande dimension (Gd) comprise entre 600 et 750 µm.

7. Elément structuré selon l'une quelconque des revendications 5 et 6, **caractérisé en ce que** chaque cavité (8) s'évase en se rapprochant de son ouverture (16), et prend préférentiellement la forme générale d'un cône ou d'une pyramide, éventuellement tronqué(e).

8. Elément structuré selon la revendication 7, **caractérisé en ce que** chaque cavité (8) présente une partie inférieure de forme cylindrique formant réservoir (30), dont le fond (14) est préférentiellement revêtu de particules.

9. Elément structuré selon l'une quelconque des revendications 5 à 8, **caractérisé en ce que** chaque premier/second ensemble de particules (22a, 22b) s'étend tout le long d'une ligne fermée (Lf1, Lf2) de la première/seconde zone (Z1, Z2) de la surface de cavité (20).

10. Elément structuré selon l'une quelconque des revendications 1 à 4, **caractérisé en ce que** les cavités (8) sont réparties de manière régulière sur la surface structurée (6) en formant des rainures parallèles.

11. Elément structuré selon l'une quelconque des revendications précédentes, **caractérisé en ce que** ladite surface de cavité (20) présente une inclinaison, par rapport à une direction de profondeur (18) de la cavité (8), comprise entre 15 et 35°, et plus préférentiellement entre 20 et 30°.

12. Elément structuré selon l'une quelconque des revendications précédentes, **caractérisé en ce qu'**il est réalisé à l'aide de l'un des matériaux suivants :
- polyéthylène haute densité ;
- poly(méthacrylate de méthyle) ;
- polycarbonate.

13. Elément structuré selon l'une quelconque des revendications précédentes, **caractérisé en ce que** ledit premier ensemble de particules comprend des particules (22a) de nitrure de bore hexagonal, et **en ce que** le second ensemble de particules comprend des particules (22b) de silice.

14. Elément structuré selon l'une quelconque des revendications précédentes, **caractérisé en ce que** ledit second ensemble de particules (22b) se situe plus proche du fond (14) de la cavité que le premier ensemble de particules (22a), et **en ce que** ledit second ensemble comporte des particules présentant des propriétés de répulsion de l'eau.

15. Mélangeur statique (1) comprenant au moins un élément structuré (1) selon l'une quelconque des revendications précédentes.

## Patentansprüche

1. Strukturiertes Element (4), das dazu ausgelegt ist, in Kontakt mit wenigstens einem ersten Fluid (F1) und einem zweiten Fluid (F2) zu sein, wobei das strukturierte Element eine Oberfläche zur Zirkulation von Fluiden (6) umfasst, die strukturiert ist durch das Vorhandensein von Lufthohlräumen (8) mit einer Tiefe, die zwischen 100 und 1000 µm enthalten ist, und die auf gleichmäßige Weise über die strukturierte Oberfläche (6) verteilt sind, wobei jeder Hohlraum (8) durch eine Hohlraumoberfläche (20) begrenzt ist,
**dadurch gekennzeichnet, dass** die Hohlraumoberfläche wenigstens eine erste Zone (Z1) und eine zweite Zone (Z2) umfasst, die entlang einer Tiefenrichtung (18) des Hohlraums aufeinander folgen, wobei die erste Zone mit einer ersten Gruppe von Partikeln (22a) beschichtet ist, die Eigenschaften zur Abstoßung des ersten Fluids aufweisen, und die zweite Zone mit einer zweiten Gruppe von Partikeln (22b) beschichtet ist, die von der ersten Gruppe verschieden ist und Eigenschaften zur Abstoßung des zweiten Fluids aufweist, wobei die zweite Gruppe von Partikeln eine schwächere Abstoßung des ersten Fluids gewährleistet als die erste Gruppe von Partikeln, wohingegen diese eine schwächere Abstoßung des zweiten Fluids gewährleistet als die zweite Gruppe von Partikeln.

2. Strukturiertes Element nach Anspruch 1, **dadurch gekennzeichnet, dass** die Tiefe der Lufthohlräume (8) zwischen 100 und 500 µm enthalten ist.

3. Strukturiertes Element nach einem der vorhergehenden Ansprüche, **dadurch gekennzeichnet, dass** die erste und die zweite Gruppe von Partikeln (22a, 22b) Partikel umfassen, deren größte Abmessung zwischen 0,2 und 10 µm enthalten ist.

4. Strukturiertes Element nach einem der vorhergehenden Ansprüche, **dadurch gekennzeichnet, dass** die erste und die zweite Gruppe von Partikeln (22a, 22b) Partikel mit flacher und/oder hemisphärischer Form umfassen.

5. Strukturiertes Element nach einem der vorhergehenden Ansprüche, **dadurch gekennzeichnet, dass** die Hohlräume (8) auf gleichmäßige Weise über die strukturierte Oberfläche (6) gemäß einer Vernetzung mit dreieckiger, quadratischer, rechteckiger oder hexagonaler Form verteilt sind.

6. Strukturiertes Element nach dem vorhergehenden Anspruch, **dadurch gekennzeichnet, dass** jeder Hohlraum eine größte Abmessung (Gd) aufweist, die zwischen 600 und 750 µm enthalten ist.

7. Strukturiertes Element nach einem der Ansprüche 5 und 6, **dadurch gekennzeichnet, dass** jeder Hohlraum (8) sich bei Annäherung an seine Öffnung (16) aufweitet und vorzugsweise die allgemeine Form eines Kegels oder einer Pyramide aufweist, gegebenenfalls abgeschnitten.

8. Strukturiertes Element nach Anspruch 7, **dadurch gekennzeichnet, dass** jeder Hohlraum (8) einen unteren Teil mit zylindrischer Form aufweist, der ein Reservoir (30) bildet, dessen Boden (14) vorzugsweise mit Partikeln beschichtet ist.

9. Strukturiertes Element nach einem der Ansprüche 5 bis 8, **dadurch gekennzeichnet, dass** jede erste/zweite Gruppe von Partikeln (22a, 22b) sich entlang einer geschlossenen Linie (Lf1, Lf2) der ersten/zweiten Zone (Z1, Z2) der Hohlraumoberfläche (20) erstreckt.

10. Strukturiertes Element nach einem der Ansprüche 1 bis 4, **dadurch gekennzeichnet, dass** die Hohlräume (8) auf gleichmäßige Weise über die strukturierte Oberfläche (6) verteilt sind, wobei sie parallele Rillen bilden.

11. Strukturiertes Element nach einem der vorhergehenden Ansprüche, **dadurch gekennzeichnet, dass** die Hohlraumoberfläche (20) eine Neigung mit Bezug zu einer Tiefenrichtung (18) des Hohlraums (8) aufweist, die zwischen 15 und 35° enthalten ist, und weiter bevorzugt zwischen 20 und 30°.

12. Strukturiertes Element nach einem der vorhergehenden Ansprüche, **dadurch gekennzeichnet, dass** es mit Hilfe eines der folgenden Materialien hergestellt ist:
- hochdichtes Polyethylen;
- Poly(Methylmethacrylat);
- Polycarbonat.

13. Strukturiertes Element nach einem der vorhergehenden Ansprüche, **dadurch gekennzeichnet, dass** die erste Gruppe von Partikeln Partikel (22a) aus hexagonalem Bornitrid umfasst, und dass die zweite Gruppe von Partikeln Partikel (22b) aus Siliziumdioxid umfasst.

14. Strukturiertes Element nach einem der vorhergehenden Ansprüche, **dadurch gekennzeichnet, dass** die zweite Gruppe von Partikeln (22b) sich näher bei dem Boden (14) des Hohlraums befindet als die erste Gruppe von Partikeln (22a), und dass die zweite Gruppe Partikel umfasst, die Eigenschaften zur Abstoßung von Wasser aufweisen.

15. Statischer Mischer (1), umfassend wenigstens ein strukturiertes Element (1) nach einem der vorhergehenden Ansprüche.

## Claims

1. Structured element (4) intended to be in contact with at least one first fluid (F1) and one second fluid (F2), the structured element comprising a surface for circulating fluids (6) structured by the presence of air cavities (8) with a depth of between 100 and 1000µm and distributed regularly over the structured surface (6), each cavity (8) being delimited by a cavity surface (20),
**characterised in that** the cavity surface comprises at least one first zone (Z1) and one second zone (Z2) succeeding one another along a direction of depth (18) of the cavity, the first zone being coated with a first set of particles (22a) having properties for repelling the first fluid, and the second zone being coated with a second set of particles (22b), different from the first set and having properties for repelling the second fluid, the second set of particles ensuring a weaker repulsion of the first fluid than the first set of particles, whereas this latter ensures a weaker repulsion of the second fluid than the second set of particles.

2. Structured element according to claim 1, **characterised in that** the depth of the air cavities (8) is between 100 and 500µm.

3. Structured element according to claim 1, **characterised in that** said first and second sets of particles (22a, 22b) comprise particles of which the greatest size is between 0.2 and 10µm.

4. Structured element according to claim 1, **characterised in that** said first and second sets of particles (22a, 22b) comprise flat-shaped and/or hemispheric particles.

5. Structured element according to claim 1, **characterised in that** the cavities (8) are distributed regularly over the structured surface (6) along a triangular, square, rectangular or hexagonal-shaped mesh.

6. Structured element according to the preceding claim, **characterised in that** each cavity has a greater size (Gd) of between 600 and 750µm.

7. Structured element according to claim 5, **characterised in that** each cavity (8) is flared by moving closer to the opening (16) thereof, and preferably takes the general shape of a cone or of a pyramid, possibly truncated.

8. Structured element according to claim 7, **characterised in that** each cavity (8) has a lower, cylindrically-shaped part forming a reservoir (30), of which the bottom (14) is preferably coated with particles.

9. Structured element according to claim 5, **characterised in that** each first/second set of particles (22a, 22b) extends all along a closed line (Lf1, Lf2) of the first/second zone (Z1, Z2) of the cavity surface (20).

10. Structured element according to claim 1, **characterised in that** the cavities (8) are distributed regularly over the structured surface (6) by forming parallel grooves.

11. Structured element according to claim 1, **characterised in that** said cavity surface (20) has a tilt, with respect to a direction of depth (18) of the cavity (8), of between 15 and 35°, and more preferably between 20 and 30°.

12. Structured element according to claim 1, **characterised in that** it is produced using one of the following materials:
- high-density polyethylene;
- polymethylmethacrylate;
- polycarbonate.

13. Structured element according to claim 1, **characterised in that** said first set of particles (22a) of hexagonal boron nitride, and **in that** the second set of particles comprises silica particles (22b).

14. Structured element according to claim 1, **characterised in that** said second set of particles (22b) is situated closer to the bottom (14) of the cavity than the first set of particles (22a), and **in that** said second set comprises particles having properties for repelling water.

15. Static mixer (1) comprising at least one structured element (1) according to claim 1.
